# EUROPÄISCHE PATENTANMELDUNG

(11) **EP 4 223 619 A2**
(43) Veröffentlichungstag der Anmeldung: **09.08.2023**
(21) Anmeldenummer: 23166724.7
(22) Anmeldetag: 27.08.2019
(51) Int. Cl.: B62D 25/00, B29C 44/18, B62D 29/00, B29L 31/30

(54) **VORRICHTUNG ZUR VERSTÄRKUNG, ABDICHTUNG ODER DÄMPFUNG EINES STRUKTURELEMENTES**

(30) Priorität: 31.08.2018 EP 18192093
(62) Teilanmeldung aus: 19758419.6
(71) Anmelder: Sika Technology AG, 6340 Baar (CH)
(72) Erfinder: LINDGREN, Henrik, 7181 Feluy (BE); BELPAIRE, Vincent, 1180 Uccle (BE)
(74) Vertreter: Sika Patent Attorneys

(57) **Zusammenfassung**

Eine Vorrichtung zur Verstärkung, Abdichtung oder Dämpfung eines Strukturelementes in einem Kraftfahrzeug umfasst einen Träger mit einem ersten seitlichen Bereich und einem zweiten seitlichen Bereich und einen ersten Klebstoff zur Verbindung des Trägers mit dem Strukturelement. Der erste Klebstoff ist auf dem ersten seitlichen Bereich des Trägers angeordnet. Der zweite seitliche Bereich des Trägers ist derart ausgebildet, dass ein zweiter Klebstoff, welcher auf das Strukturelement oder auf den zweiten seitlichen Bereich des Trägers pumpbar oder extrudierbar ist, während und/oder nach dessen Aktivierung durch den zweiten seitlichen Bereich des Trägers gestützt ist.

## Beschreibung

Die Erfindung betrifft eine Vorrichtung zur Verstärkung, Abdichtung oder Dämpfung eines Strukturelementes mit einem Träger und einem Klebstoff. Sie betrifft des Weiteren ein System mit einem Strukturelement und einer darin angeordneten Vorrichtung, sowie ein Verfahren zur Verstärkung, Abdichtung oder Dämpfung eines Strukturelementes.

Vielfach weisen Bauelemente, wie beispielsweise Karosserien und/oder Rahmen von Transport- und Fortbewegungsmitteln, insbesondere von Fahrzeugen zu Wasser oder zu Land oder von Luftfahrzeugen, Strukturen mit Hohlräumen auf, um leichtgewichtige Konstruktionen zu ermöglichen. Diese Hohlräume verursachen jedoch verschiedenste Probleme. Je nach Art des Hohlraumes muss dieser zum Verhindern des Eindringens von Feuchtigkeit und Verschmutzungen, die zur Korrosion der Bauelemente führen können, abgedichtet werden. Oft ist es auch wünschenswert, die Hohlräume und somit das Bauelement wesentlich zu verstärken, jedoch das geringe Gewicht beizubehalten. Oft ist es auch notwendig, die Hohlräume und somit die Bauelemente zu stabilisieren, um Geräusche, die sonst den Hohlraum entlang oder durch diesen hindurch übertragen werden würden, zu reduzieren. Viele dieser Hohlräume weisen eine unregelmässige Form oder ein enges Ausmass auf, wodurch es erschwert wird, sie richtig abzudichten, zu verstärken und zu dämpfen.

Insbesondere im Automobilbau, aber auch im Flugzeug- und Bootsbau, werden deshalb Abdichtungselemente (Englisch: baffle) verwendet, um Hohlräume abzudichten und/ oder akustisch abzuschotten, oder Verstärkungselemente (Englisch: reinforcer) verwendet, um Hohlräume zu verstärken.

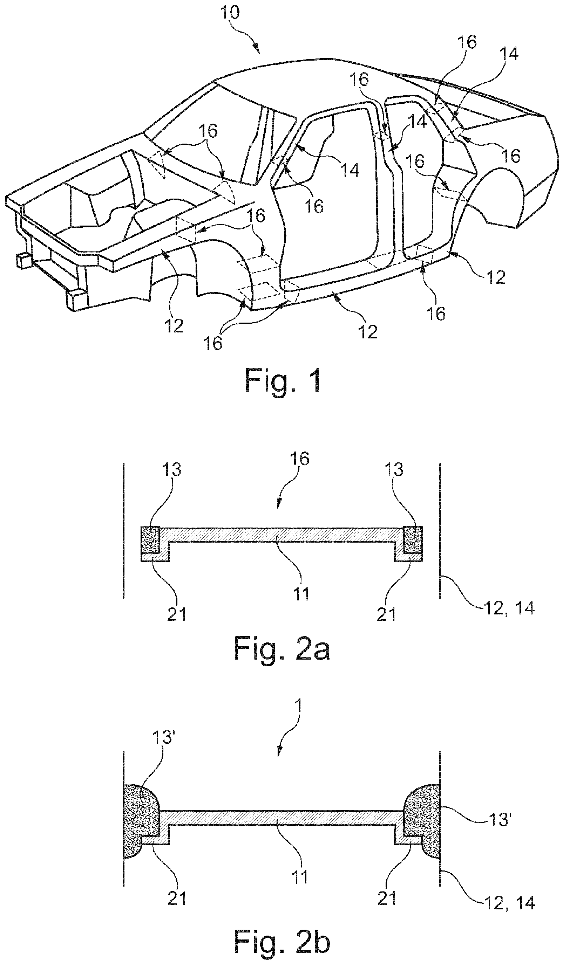

In Fig. 1 ist eine Karosserie eines Automobils schematisch dargestellt. Die Karosserie 10 weist dabei verschiedene Strukturen mit Hohlräumen, wie beispielsweise Säulen 14 und Träger bzw. Verstrebungen 12 auf. Solche Strukturelemente 12, 14 mit Hohlräumen werden üblicherweise mit Abdichtungs- und/oder Verstärkungselementen 16 abgedichtet bzw. verstärkt.

Fig. 2a und 2b zeigen schematisch ein bekanntes Konzept zum abdichtenden und/oder verstärkenden Verschluss von Öffnungen bzw. Hohlräumen in einem Kraftfahrzeug. Dabei zeigt die Fig. 2a eine Vorrichtung 16 vor einer Expansion eines Klebstoffes 13. Fig. 2b zeigt dieselbe Vorrichtung 16 als Bestandteil des Systems 1, jedoch nach einer Expansion des Klebstoffes 13, also mit dem expandierten Klebstoff 13'.

Die Vorrichtung 16 befindet sich in einem Hohlraum einer Karosseriestruktur, wie sie beispielsweise in Fig. 1 dargestellt ist. Ein Abschnitt eines solchen Strukturelements 12, 14 einer Karosserie ist in den Fig. 2a und 2b schematisch dargestellt. Die Vorrichtung 16 umfasst einen Träger 11, welcher einen Randbereich 21 hat. Der Klebstoff 13 ist dabei im Wesentlichen auf diesem Randbereich 21 des Trägers 11 angeordnet.

Vor der Expansion des Klebstoffes 13 besteht zwischen der Vorrichtung 16 und dem Strukturelement 12, 14 ein Spalt. Dieser Spalt erlaubt es, das Strukturelement 12, 14 zu beschichten, um einen Korrosionsschutz des Strukturelementes 12, 14 zu erreichen. Nach dieser Beschichtung wird der Klebstoff13 üblicherweise durch eine Wärmeeinwirkung expandiert, wobei der expandierte Klebstoff 13' dadurch den Spalt zwischen der Vorrichtung 16 und dem Strukturelement 12, 14 schliesst. Zudem wird durch die Expansion des Klebstoffes 13 auch zugleich eine Fixierung der Vorrichtung 16' im Strukturelement 12, 14 erreicht. Eine derart im Strukturelement 12, 14 befestigte Vorrichtung 16' verstärkt einerseits das Strukturelement 12, 14 und verschliesst andererseits den Hohlraum im Strukturelement 12, 14.

Der Erfindung liegt die Aufgabe zugrunde, eine verbesserte Vorrichtung zur Verstärkung, Abdichtung oder Dämpfung eines Strukturelementes zur Verfügung zu stellen. Insbesondere soll eine solche Vorrichtung eine gleichbleibende oder verbesserte Funktion hinsichtlich der Verstärkung, Abdichtung oder Dämpfung des Strukturelementes aufweisen, und gleichzeitig sollen Werkzeugkosten und die Prozesskomplexität verringert werden.

Diese Aufgabe wird gelöst durch eine Vorrichtung zur Verstärkung, Abdichtung oder Dämpfung eines Strukturelementes in einem Kraftfahrzeug, umfassend: einen Träger mit einem ersten seitlichen Bereich und einem zweiten seitlichen Bereich; und einen ersten Klebstoff zur Verbindung des Trägers mit dem Strukturelement, wobei der erste Klebstoff auf dem ersten seitlichen Bereich des Trägers angeordnet ist; wobei der zweite seitliche Bereich des Trägers derart ausgebildet ist, dass ein zweiter Klebstoff, welcher auf das Strukturelement oder auf den zweiten seitlichen Bereich des Trägers pumpbar oder extrudierbar ist, während und/oder nach dessen Aktivierung durch den zweiten seitlichen Bereich des Trägers gestützt ist.

Diese Lösung hat den Vorteil, dass durch das Vorsehen eines ersten Klebstoffs in Kombination mit einem separat angeordneten zweiten Klebstoff ein System geschaffen werden kann, welches besser auf die jeweiligen Anforderungen ausgerichtet ist, weil der erste Klebstoff und der zweite Klebstoff unterschiedlich sein können und somit den individuellen Anforderungen ideal angepasst werden können.
Zugleich ist eine Prozesskomplexität gering, weil die hier vorgeschlagene Lösung neue Funktionalitäten mit einfachen Systemen (Zweikomponentenvorrichtungen und extrudierbare bzw. pumpbare Klebstoffe) gewährleisten kann. Auch die Werkzeugkosten können reduziert oder beibehalten werden, da die hier vorgeschlagene Lösung komplexe Funktionalitäten, welche üblicherweise komplexe Herstellungsprozesse erfordern, mit einfachen Mitteln wie beispielsweise Zweikomponenten-Spritzguss ermöglicht.

Ein Kerngedanke der vorliegenden Erfindung ist es, dass ein bereits auf dem Träger angeordneter erster Klebstoff mit einem nachträglich in das System eingebrachten zweiten Klebstoff kombiniert wird, um insgesamt eine verbesserte Vorrichtung zur Verstärkung, Abdichtung oder Dämpfung des Strukturelementes zu bewirken. Ein grosser Vorteil dieser Lösung ist darin zu sehen, dass dabei der erste Klebstoff und der zweite Klebstoff grundsätzlich frei kombinierbar miteinander sind. Beispielsweise kann ein erster Klebstoff mit einer Dämpfungsfunktion mit einem zweiten Klebstoff mit einer Verstärkungsfunktion kombiniert werden. Oder es können ein erster Klebstoff mit einer Verstärkungsfunktion mit einem zweiten Klebstoff mit einer zweiten Verstärkungsfunktion mit anderen Parametern kombiniert werden. Insgesamt können mit der hier vorgeschlagenen Lösung mit kostengünstigen und wenigen komplexen Mitteln unterschiedlichste Anforderungen hinsichtlich Verstärkung, Abdichtung oder Dämpfung von Strukturelementen abgedeckt werden.

Die hier vorgeschlagene Lösung bietet den Vorteil, dass der zweite Klebstoff automatisiert appliziert werden kann, beispielsweise durch Roboter. Somit lassen sich Arbeitskosten einsparen, und eine Präzision und Konstanz der Anwendung kann verbessert werden.

Weiterhin hat die Lösung den Vorteil, dass der zweite Klebstoff in Form von Bulkware bereitgestellt werden kann. Dies ist insbesondere ein Vorteil gegenüber Systemen, in welchen vorfabrizierte Elemente anstelle des hier verwendeten zweiten Klebstoffes eingesetzt werden. Um solche Elemente auf Mass und Anzahl vorzufabrizieren, ist ein erheblicher Herstellungs- und Logistikaufwand nötig, welcher mit der vorliegenden Erfindung vermieden werden kann.

Weiterhin hat die Lösung den Vorteil, dass durch den zweiten Klebstoff, welcher auf das Strukturelement und/oder auf den Träger appliziert wird, die Bereiche der Fügestellen des Strukturelementes bereits ausgefüllt werden können, bevor der zweite Klebstoff aktiviert wird. Dies ist insbesondere ein Vorteil gegenüber Systemen, in welchen vorfabrizierte Elemente anstelle des hier verwendeten zweiten Klebstoffes eingesetzt werden, denn solche vorfabrizierten Elemente können die Bereiche der Fügestellen nicht oder nur ungenügend ausfüllen, was eine schlechtere Verstärkung bzw. Abdichtung bzw. Dämpfung des Strukturelementes zur Folge hat.

Ein weiterer Vorteil dieser Lösung liegt darin, dass eine einzige standardisierte Vorrichtung für verschiedene Strukturelemente eingesetzt werden kann. Dabei füllt die Vorrichtung mit dem ersten Klebstoff insbesondere einen Grossteil des Hohlraums im Strukturelement aus. Der zweite Klebstoff wird insbesondere in Bereichen des Hohlraumes eingesetzt, welche mit der Vorrichtung schwer zugänglich und somit schwer auszufüllen sind. Da der zweite Klebstoff individuell appliziert wird, kann eine Menge und eine Gestalt des zweiten Klebstoffes individuell an das jeweilige Strukturelement angepasst werden. Somit müssen für verschiedene Strukturelemente bzw. für verschiedene Hohlräume des Strukturelementes keine individuellen Vorrichtungen produziert werden, sondern es kann mit einer standardisierten Vorrichtung bzw. mit einigen wenigen standardisierten Vorrichtungen ein grosses Spektrum an verschiedenen Strukturelementen abgedeckt werden im Zusammenspiel mit dem zweiten Klebstoff.

In einer beispielhaften Ausführungsform sind der erste seitliche Bereich und der zweite seitliche Bereich des Trägers einander im Wesentlichen gegenüberliegend angeordnet.

In einer beispielhaften Ausführungsform sind der erste seitliche Bereich und der zweite seitliche Bereich des Trägers derart ausgebildet, dass sie in einem vorgesehenen Verwendungszustand der Vorrichtung im Strukturelement jeweils gegenüberliegenden Innenwänden des Strukturelementes zugewandt sind.

In einer beispielhaften Ausführungsform ist der Träger derart ausgebildet, dass der zweite seitliche Bereich in einem vorgesehenen Verwendungszustand zwischen 1 und 10 mm, bevorzugt zwischen 1 und 6 mm, besonders bevorzugt zwischen 2 und 5 mm, vom Strukturelement beabstandet ist.

Eine solche Ausbildung des Trägers und insbesondere des zweiten seitlichen Bereiches hat den Vorteil, dass dadurch eine Stützfunktion des zweiten seitlichen Bereiches für zweite Klebstoffe, welche eine niedrigere Expansionsrate haben, während und/oder nach dessen Aktivierung besser ausgestaltet werden kann.

In einer beispielhaften alternativen Ausführungsform ist der Träger derart ausgebildet, dass der zweite seitliche Bereich in einem vorgesehenen Verwendungszustand zwischen 20 und 80 mm, bevorzugt zwischen 25 und 70 mm, besonders bevorzugt zwischen 30 und 60 mm, vom Strukturelement beabstandet ist.

Eine solche Ausbildung des Trägers und insbesondere des zweiten seitlichen Bereiches hat den Vorteil, dass dadurch eine Stützfunktion des zweiten seitlichen Bereiches für zweite Klebstoffe, welche eine höhere Expansionsrate haben, während und/oder nach dessen Aktivierung besser ausgestaltet werden kann.

In einer beispielhaften Ausführungsform hat der zweite seitliche Bereich eine Ausdehnung in Richtung einer Längsachse des Strukturelementes (bezogen auf einen vorgesehenen Verwendungszustand der Vorrichtung im Strukturelement) zwischen 5 und 50 mm, bevorzugt zwischen 10 und 40 mm, besonders bevorzugt zwischen 15 und 35 mm.

Eine solche Ausdehnung des zweiten seitlichen Bereiches hat wiederum den Vorteil, dass dadurch der zweite Klebstoff während und/oder nach seiner Aktivierung besser vom zweiten seitlichen Bereich des Trägers gestützt werden kann.

In einer beispielhaften Ausführungsform hat der zweite seitliche Bereich zumindest einen Vorsprung, welcher vom zweiten seitlichen Bereich wegragt.

In einer beispielhaften Weiterführung ist dieser Vorsprung als längliche Rippe ausgebildet.

In einer beispielhaften Ausführungsform ist der Vorsprung in Form einer länglichen Rippe im Wesentlichen in Richtung der Längsachse des Strukturelementes oder aber im Wesentlichen in Richtung quer zur Längsachse des Strukturelementes ausgebildet.

In einer beispielhaften Ausführungsform ist der Vorsprung im Wesentlichen an einem Rand des zweiten seitlichen Bereiches oder aber im Wesentlichen in einem mittleren Bereich des zweiten seitlichen Bereiches angeordnet.

In einer beispielhaften Ausführungsform hat der zweite seitliche Bereich einen oder zwei oder drei oder vier oder mehr als vier Vorsprünge.

Die Ausgestaltung und Anordnung solcher Vorsprünge am zweiten seitlichen Bereich des Trägers ist abhängig von der Art und der Anordnung des zweiten Klebstoffes. Beispielsweise können stark expandierende zweite Klebstoffe mit anderen zweiten seitlichen Bereichen bzw. Vorsprüngen kombiniert werden als wenig oder nicht expandierbare zweite Klebstoffe. Demnach kann die Gestalt des zweiten seitlichen Bereiches des Trägers und insbesondere dessen Vorsprünge an den jeweiligen zweiten Klebstoff angepasst werden.

In einer beispielhaften Ausführungsform ist eine Ausdehnung des ersten seitlichen Bereiches in Richtung einer Längsachse des Strukturelementes kleiner oder gleich oder grösser als eine Ausdehnung des zweiten seitlichen Bereiches in Richtung einer Längsachse des Strukturelementes.

Wiederum können Ausgestaltung und Ausdehnung der seitlichen Bereiche an die jeweilig gewählten Klebstoffe angepasst werden.

In einer beispielhaften Ausführungsform hat der Träger zumindest ein Befestigungselement zur Anordnung der Vorrichtung im Strukturelement.

In einer beispielhaften Weiterführung ist dieses Befestigungselement als Clip ausgebildet.

Dieses Befestigungselement hat insbesondere die Funktion, die Vorrichtung im Strukturelement in einer vorgesehenen Position zu fixieren, bis die Klebstoffe aktiviert worden sind und sodann den Träger endgültig im Strukturelement halten.

In einer beispielhaften Ausführungsform ist das Befestigungselement am ersten seitlichen Bereich des Trägers angeordnet.

In einer beispielhaften Ausführungsform hat der zweite seitliche Bereich des Trägers kein Befestigungselement.

In einer beispielhaften Ausführungsform sind der Träger und das Befestigungselement einstückig ausgebildet.

In einer weiteren beispielhaften Ausführungsform sind der Träger und das Befestigungselement aus demselben Material ausgebildet.

In einer beispielhaften Ausführungsform ist der erste Klebstoff durch ein Spritzgussverfahren auf dem Träger angeordnet.

In einer beispielhaften Ausführungsform ist der Träger durch ein Spritzgussverfahren hergestellt.

In einer beispielhaften Ausführungsform sind der Träger und der erste Klebstoff durch ein Zweikomponenten-Spritzgussverfahren hergestellt.

In einer beispielhaften Ausführungsform umfasst der Träger einen Kunststoff, insbesondere Polyamid.

In einer beispielhaften Ausführungsform umfasst der Träger einen faserverstärkten Kunststoff, insbesondere einen glasfaserverstärkten oder karbonfaserverstärkten Kunststoff.

Der Träger kann grundsätzlich aus verschiedenen Materialien bestehen. Bevorzugte Materialien sind Kunststoffe, insbesondere Polyurethane, Polyamide, Polyester und Polyolefine, bevorzugt hochtemperaturbeständige Polymere wie Poly(phenylenether), Polysulfone oder Polyethersulfone, welche insbesondere auch geschäumt sind; Metalle, insbesondere Aluminium und Stahl; oder gewachsene organische Materialien, insbesondere Holz- oder andere (gepresste) Faserwerkstoffe oder glasartige oder keramische Materialien; speziell auch geschäumte Materialien dieser Art; oder beliebige Kombinationen dieser Materialien. Besonders bevorzugt wird Polyamid, insbesondere Polyamid 6, Polyamid 6,6, Polyamid 11, Polyamid 12 oder ein Gemisch davon verwendet. Auch Kombinationen mit Fasern, wie beispielsweise Glasfasern oder Karbonfasern, sind möglich.

Weiterhin kann der Träger einen beliebigen Aufbau und eine beliebige Struktur aufweisen. Er kann beispielsweise massiv, hohl, oder geschäumt sein oder eine gitterartige Struktur aufweisen. Die Oberfläche des Trägers kann typischerweise glatt, rau oder strukturiert sein.

In einer beispielhaften Ausführungsform bildet der erste Klebstoff ein einziges zusammenhängendes Element. In einer alternativen Ausführungsform bilden mehrere nicht zusammenhängende erste Klebstoffe mehrere nicht zusammenhängende Elemente.

In einer beispielhaften Ausführungsform hat der erste Klebstoff eine Expansionsrate von 300 bis 3000%. In einer beispielhaften Weiterbildung hat der erste Klebstoff eine Expansionsrate von 1000 und 2700% oder zwischen 1500 und 2500%.

Ein beispielhaftes Material mit einer solchen Expansionsrate ist unter dem Handelsnamen SikaBaffle^{®} 455 erhältlich.

In einer alternativen Ausführungsform hat der erste Klebstoff eine Expansionsrate von 50 bis 500%. In einer beispielhaften Weiterbildung hat der erste Klebstoff eine Expansionsrate von 70 und 400% bzw. zwischen 100 und 300%.

Ein beispielhaftes Material mit einer solchen Expansionsrate ist unter dem Handelsnamen SikaReinforcer^{®} 940 erhältlich.

In einer weiteren alternativen Ausführungsform ist der erste Klebstoff ein im Wesentlichen nicht-expandierbarer Klebstoff. Dabei kann der Klebstoff bei einer Aktivierung dennoch eine geringe Volumenveränderung erfahren. In einer beispielhaften Ausführungsform hat ein solcher erster Klebstoff eine Expansionsrate von weniger als +/-15% oder von weniger als +/- 10% oder von weniger als +/- 5%.

Ein beispielhaftes Material eines solchen im Wesentlichen nicht-expandierbaren Klebstoffes ist unter dem Handelsnamen SikaPower^{®} erhältlich.

Die eingangs gestellte Aufgabe wird zudem gelöst durch ein System zur Verstärkung, Abdichtung oder Dämpfung eines Strukturelementes in einem Kraftfahrzeug, das System umfassend: ein Strukturelement; eine Vorrichtung nach obiger Beschreibung, wobei die Vorrichtung im Strukturelement angeordnet ist; und einen zweiten Klebstoff, welcher auf das Strukturelement und/oder auf den zweiten seitlichen Bereich des Trägers gepumpt oder extrudiert ist.

In einer beispielhaften Ausführungsform ist der zweite Klebstoff in Form einer Raupe oder mehrerer Raupen auf den zweiten seitlichen Bereich oder auf das Strukturelement gepumpt oder extrudiert.

In einer beispielhaften Ausführungsform bildet der zweite Klebstoff ein einziges zusammenhängendes Element. In einer alternativen Ausführungsform bilden mehrere nicht zusammenhängende zweite Klebstoffe mehrere nicht zusammenhängende Elemente.

In einer beispielhaften Ausführungsform ist der zweite Klebstoff im Bereich zumindest einer Fügestelle des Strukturelementes sowohl mit einem ersten Bestandteil des Strukturelementes als auch mit einem zweiten Bestandteil des Strukturelementes in Kontakt.

Dies hat den Vorteil, dass dadurch der Bereich der Fügestellen besser verstärk bzw. abgedichtet bzw. gedämpft werden kann.

In einer beispielhaften Ausführungsform ist der zweite Klebstoff pumpbar bei einer Temperatur von weniger als 80°C, bevorzugt von weniger als 70°C, bevorzugt von weniger als 60°C, besonders bevorzugt von weniger als 50°C.

In einer beispielhaften Ausführungsform ist der zweite Klebstoff extrudierbar bei einer Temperatur von weniger als 100°C, bevorzugt von weniger als 90°C, bevorzugt von weniger als 80°C, besonders bevorzugt von weniger als 70°C.

In einer beispielhaften Ausführungsform ist der zweite Klebstoff pumpbar oder extrudierbar bei einer Temperatur, welche um zumindest 20 K oder um zumindest 30 K oder um zumindest 40 K oder um zumindest 50 K oder um zumindest 60 K unter einer Aktivierungstemperatur des zweiten Klebstoffes liegt.

In einer beispielhaften Ausführungsform hat der zweite Klebstoff eine Expansionsrate von 300 bis 3000%. In einer beispielhaften Weiterbildung hat der zweite Klebstoff eine Expansionsrate von 1000 und 2700% oder zwischen 1500 und 2500%.

Ein beispielhaftes Material mit einer solchen Expansionsrate ist unter dem Handelsnamen SikaBaffle^{®} 455 erhältlich.

In einer alternativen Ausführungsform hat der zweite Klebstoff eine Expansionsrate von 50 bis 500%. In einer beispielhaften Weiterbildung hat der zweite Klebstoff eine Expansionsrate von 70 und 400% bzw. zwischen 100 und 300%.

Ein beispielhaftes Material mit einer solchen Expansionsrate ist unter dem Handelsnamen SikaReinforcer^{®} 940 erhältlich.

In einer weiteren alternativen Ausführungsform hat der zweite Klebstoff eine Expansionsrate von zumindest 200% oder zumindest 300 % oder zumindest 400 % oder zumindest 500 %.

Ein solcher expandierbarer und pumpbarer Klebstoff ist beispielhaft in der Europäischen Patentanmeldung EP 3 281 970 A1 beschrieben.

Ein beispielhaftes Material mit einer solchen Expansionsrate ist unter dem Handelsnamen SikaSeal^{®} erhältlich.

In einer weiteren alternativen Ausführungsform ist der erste Klebstoff ein im Wesentlichen nicht-expandierbarer Klebstoff. Dabei kann der Klebstoff bei einer Aktivierung dennoch eine geringe Volumenveränderung erfahren. In einer beispielhaften Ausführungsform hat ein solcher erster Klebstoff eine Expansionsrate von weniger als +/-15% oder von weniger als +/- 10% oder von weniger als +/- 5%.

Ein beispielhaftes Material eines solchen im Wesentlichen nicht-expandierbaren Klebstoffes ist unter dem Handelsnamen SikaPower^{®} erhältlich.

Die eingangs gestellte Aufgabe wird weiterhin gelöst durch ein Verfahren zur Verstärkung, Abdichtung oder Dämpfung eines Strukturelementes in einem Kraftfahrzeug, das Verfahren umfassend: Bereitstellen einer Vorrichtung nach obiger Beschreibung; Anordnen der Vorrichtung an einem ersten Bestandteil des Strukturelementes; Anordnen eines zweiten Klebstoffes auf den zweiten seitlichen Bereich des Trägers oder auf einen zweiten Bestandteil des Strukturelementes; Zusammenfügen des ersten Bestandteiles und des zweiten Bestandteiles des Strukturelementes zur Bildung des Strukturelementes, wobei die Vorrichtung und der zweite Klebstoff im Wesentlichen zwischen dem ersten Bestandteil und dem zweiten Bestandteil angeordnet ist; und Aktivieren des ersten Klebstoffes und des zweiten Klebstoffes.

In einer beispielhaften Ausführungsform wird das Anordnen des zweiten Klebstoffes auf den zweiten seitlichen Bereich des Trägers oder auf einen zweiten Bestandteil des Strukturelementes durch einen Roboter ausgeführt.

In einer beispielhaften Ausführungsform wird das Anordnen des zweiten Klebstoffes vor oder nach der Anordnung der Vorrichtung am ersten Bestandteil des Strukturelementes durchgeführt.

In einer beispielhaften Ausführungsform wird beim Aktivieren des ersten Klebstoffes und des zweiten Klebstoffes Wärme eingesetzt, insbesondere wird die Aktivierung der Klebstoffe in einem Lackierofen durchgeführt.

Einzelheiten und Vorteile der Erfindung werden im Folgenden anhand von Ausführungsbeispielen und mit Bezug auf schematische Zeichnungen beschrieben.

Es zeigen:
- Fig. 1: eine beispielhafte Darstellung einer Karosserie gemäss Stand der Technik;
- Fig. 2a und 2b: schematische Darstellung einer beispielhaften Vorrichtung gemäss Stand der Technik; und
- Fig. 3a bis 6b: schematische Darstellungen beispielhafter Systeme zur Verstärkung, Abdichtung oder Dämpfung eines Strukturelementes.

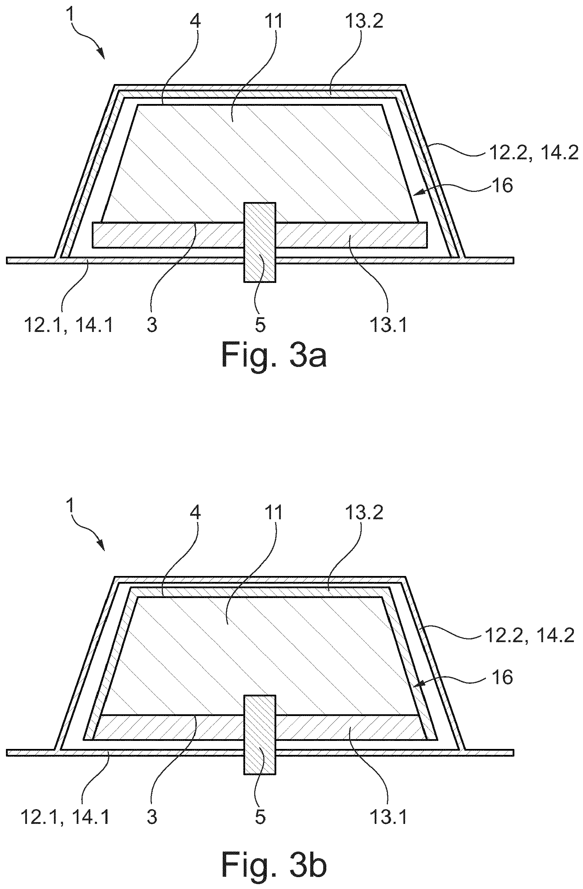

In den Fig. 3a und 3b sind unterschiedliche Varianten eines ersten Systems 1 zur Verstärkung, Abdichtung oder Dämpfung eines Strukturelementes 12, 14 schematisch und beispielhaft dargestellt. Dabei ist eine Vorrichtung 16 mit einem Träger 11 und einem am Träger 11 angeordneten ersten Klebstoff 13.1 in einem Strukturelement 12, 14 angeordnet. Das Strukturelement 12, 14 umfasst dabei einen ersten Bestandteil 12.1, 14.1 und einen zweiten Bestandteil 12.2, 14.2.

Die Vorrichtung 16 ist durch ein Befestigungselement 5 am ersten Bestandteil 12.1, 14.1 des Strukturelementes 12, 14 angeordnet.

Der Träger 11 der Vorrichtung 16 hat einen ersten seitlichen Bereich 3 und einen zweiten seitlichen Bereich 4. Dabei sind der erste seitliche Bereich 3 und der zweite seitliche Bereich 4 einander im Wesentlichen gegenüberliegend angeordnet. Der erste Klebstoff 13.1 ist am ersten seitlichen Bereich 3 des Trägers angeordnet. Der zweite Klebstoff 13.2 ist auf das Strukturelement 12, 14 (Fig. 3a) oder auf den zweiten seitlichen Bereich 4 (Fig. 3b) gepumpt oder extrudiert.

Das System 1 ist in einem Zustand vor einer Aktivierung der Klebstoffe 13.1, 13.2 dargestellt. In diesem Ausführungsbeispiel sind beide Klebstoffe 13.1, 13.2 als expandierbare Klebstoffe ausgebildet. Somit dehnen sich die Klebstoffe 13.1, 13.2 bei deren Aktivierung aus und überbrücken dadurch einen Spalt zwischen dem Träger 11 und dem Strukturelement 12, 14, so dass nach der Aktivierung der Klebstoffe 13.1, 13.2 der Träger 11 durch die Klebstoffe 13.1, 13.2 mit dem Strukturelement 12, 14 verbunden ist.

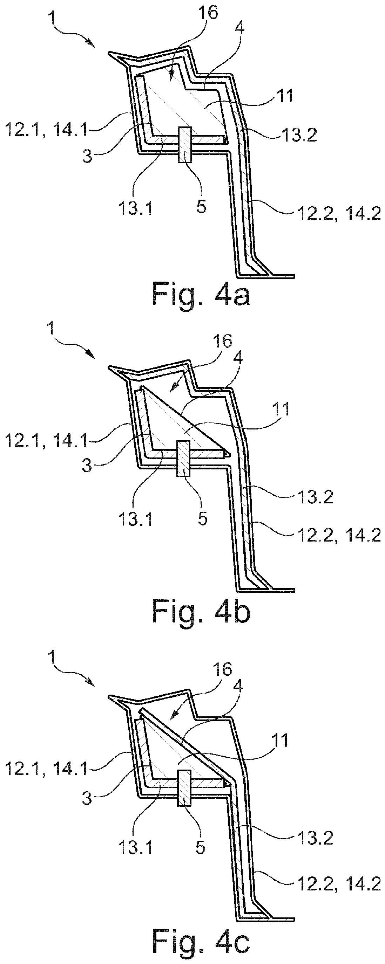

In den Fig. 4a bis 4c sind drei Varianten einer weiteren beispielhaften und schematisch dargestellten Ausführungsform dargestellt. Im Unterschied zum Ausführungsbeispiel in den Fig. 3a und 3b hat ein Hohlraum im Strukturelement 12, 14 in den Fig. 4a bis 4c einen schwer zugänglichen, länglichen Bereich. Wie aus diesem Ausführungsbeispiel ersichtlich wird, eignet sich die hier vorgeschlagene Lösung insbesondere, um mit dem zweiten Klebstoff 13.2 auch solche schwer zugänglichen Bereiche von Strukturelementen zu erreichen.

Insbesondere ist dabei der zweite Klebstoff 13.2 derart appliziert, dass der zweite Klebstoff 13.2 in Bereichen von Fügestellen des Strukturelementes 12, 14 sowohl mit dem ersten Bestandteil 12.1, 14.1 als auch mit dem zweiten Bestandteil 12.2, 14.2 des Strukturelementes 12, 14 in Kontakt ist, bevor der zweite Klebstoff 13.2 aktiviert wird. Dies hat eine besonders gute Abdichtung bzw. Verstärkung bzw. Dämpfung diese schwer zugänglichen Bereiche des Strukturelementes 12, 14 zur Folge.

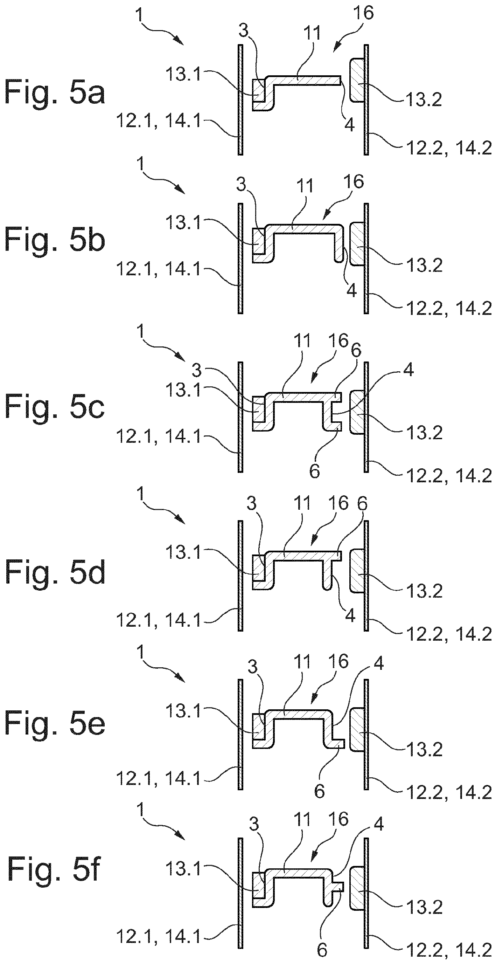

In den Fig. 5a bis 5f sind beispielhaft und schematisch Querschnitte von verschiedenen Systemen 1 dargestellt. Dabei ist schematisch aufgezeigt, dass der zweite seitliche Bereich 4 des Trägers 11 auf unterschiedliche Art und Weise ausgestaltet werden kann. Zum einen kann eine Ausdehnung des zweiten seitlichen Bereiches 4 in Längsrichtung des Strukturelementes 12, 14 unterschiedlich ausgestaltet werden. So ist beispielsweise diese Ausdehnung in Fig. 5a geringer als in den Fig. 5b bis 5f. Zum anderen kann die Ausgestaltung des zweiten seitlichen Bereiches 4 unterschiedlich ausgebildet sein. Beispielsweise können ein oder mehrere Vorsprünge 6 am zweiten seitlichen Bereich 4 angeordnet werden. Diese Vorsprünge 6 können dabei an einem Rand des zweiten seitlichen Bereiches (Fig. 5c, 5d und 5e) oder in einem mittleren Bereich des zweiten seitlichen Bereiches 4 (Fig. 5f) angeordnet werden.

Die Vorsprünge 6 können insbesondere als längliche Rippen ausgebildet sein.

In den Fig. 5a bis 5f ist ersichtlich, dass der zweite seitliche Bereich 4 des Träges 11 derart ausgestaltet und angeordnet ist, dass der zweite Klebstoff 13.2 während und/oder nach seiner Aktivierung vom zweiten seitlichen Bereich 4 gestützt ist.

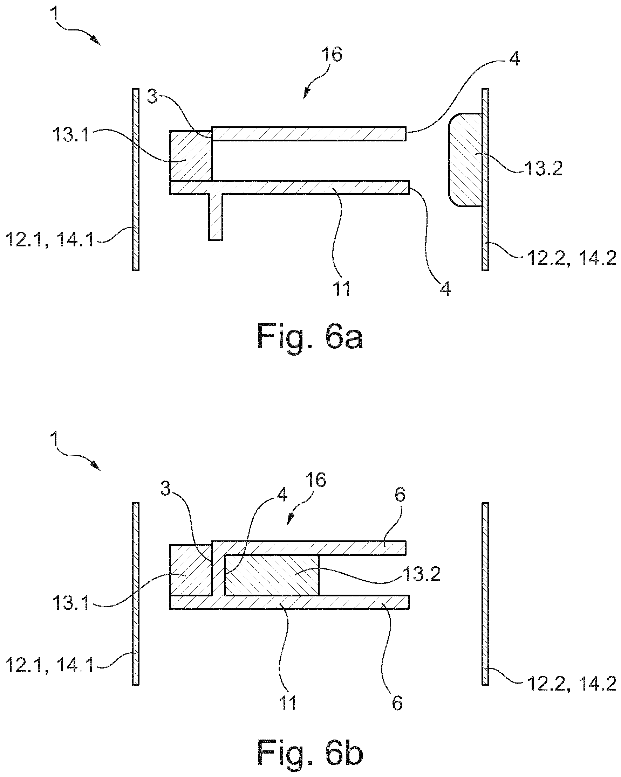

In den Fig. 6a und 6b ist eine weitere beispielhafte und schematisch dargestellte Ausführungsform eines Systems 1 zur Verstärkung, Abdichtung oder Dämpfung eines Strukturelementes dargestellt. In diesem Ausführungsbeispiel hat der Träger 11 einen im Wesentlichen doppelwandigen Querschnitt.

In Fig. 6a ist der zweite Klebstoff 13.2 auf das Strukturelement 12, 14 gepumpt oder extrudiert. In Fig. 6b ist der zweite Klebstoff 13.2 auf den zweiten seitlichen Bereich 4 des Trägers 11 gepumpt oder extrudiert.

### Bezugszeichenliste

- 1: System
- 3: erster seitlicher Bereich
- 4: zweiter seitlicher Bereich
- 5: Befestigungselement
- 6: Vorsprung
- 10: Karosserie
- 11: Träger
- 12: Strukturelement
- 12.1: erster Bestandteil
- 12.2: zweiter Bestandteil
- 13: Klebstoff
- 13.1: erster Klebstoff
- 13.2: zweiter Klebstoff
- 14: Strukturelement
- 14.1: erster Bestandteil
- 14.2: zweiter Bestandteil
- 16: Vorrichtung
- 21: Randbereich

## Patentansprüche

1. Vorrichtung (16) zur Verstärkung, Abdichtung oder Dämpfung eines Strukturelementes (12, 14) in einem Kraftfahrzeug, umfassend:
einen Träger (11) mit einem ersten seitlichen Bereich (3) und einem zweiten seitlichen Bereich (4); und
einen ersten Klebstoff (13.1) zur Verbindung des Trägers (11) mit dem Strukturelement (12, 14), wobei der erste Klebstoff (13.1) auf dem ersten seitlichen Bereich (3) des Trägers (11) angeordnet ist;
wobei der zweite seitliche Bereich (4) des Trägers (11) derart ausgebildet ist, dass ein zweiter Klebstoff (13.2), welcher auf das Strukturelement (12, 14) oder auf den zweiten seitlichen Bereich (4) des Trägers (11) pumpbar oder extrudierbar ist, während und/oder nach dessen Aktivierung durch den zweiten seitlichen Bereich (4) des Trägers (11) gestützt ist.

2. Vorrichtung nach Anspruch 1, wobei der erste seitliche Bereich (3) und der zweite seitliche Bereich (4) des Trägers (11) einander im Wesentlichen gegenüberliegend angeordnet sind.

3. Vorrichtung nach einem der vorhergehenden Ansprüche, wobei der zweite seitliche Bereich (4) eine Ausdehnung in Richtung einer Längsachse des Strukturelementes (12, 14) zwischen 5 und 50 mm hat.

4. Vorrichtung nach einem der vorhergehenden Ansprüche, wobei der zweite seitliche Bereich (4) zumindest einen Vorsprung (6) hat, welcher vom zweiten seitlichen Bereich (4) wegragt.

5. Vorrichtung nach Anspruch 4, wobei der Vorsprung (6) als längliche Rippe ausgebildet ist.

6. Vorrichtung nach Anspruch 4 oder 5, wobei der Vorsprung (6) im Wesentlichen an einem Rand des zweiten seitlichen Bereiches (4) oder im Wesentlichen in einem mittleren Bereich des zweiten seitlichen Bereiches (4) angeordnet ist.

7. Vorrichtung nach einem der Ansprüche 4 bis 6, wobei der zweite seitliche Bereich (4) einen oder zwei oder drei oder vier oder mehr als vier Vorsprünge (6) hat.

8. Vorrichtung nach einem der vorhergehenden Ansprüche, wobei der Träger (11) zumindest ein Befestigungselement (5) zur Anordnung der Vorrichtung (16) im Strukturelement (12, 14) hat.

9. Vorrichtung nach Anspruch 8, wobei das Befestigungselement (5) am ersten seitlichen Bereich (3) des Trägers (11) angeordnet ist.

10. Vorrichtung nach einem der vorhergehenden Ansprüche, wobei der zweite seitliche Bereich (4) kein Befestigungselement (5) hat.

11. Vorrichtung nach einem der vorhergehenden Ansprüche, wobei der erste Klebstoff (13.1) ein expandierbarer Klebstoff ist.

12. System (1) zur Verstärkung, Abdichtung oder Dämpfung eines Strukturelementes (12, 14) in einem Kraftfahrzeug, das System (1) umfassend:
ein Strukturelement (12, 14);
eine Vorrichtung (16) nach einem der Ansprüche 1 bis 11, wobei die Vorrichtung (16) im Strukturelement (12, 14) angeordnet ist; und
einen zweiten Klebstoff (13.2), welcher auf das Strukturelement (12, 14) und/oder auf den zweiten seitlichen Bereich (4) des Trägers (11) gepumpt oder extrudiert ist.

13. System nach Anspruch 12, wobei der zweite Klebstoff (13.2) in Form einer Raupe oder mehrerer Raupen auf dem zweiten seitlichen Bereich (4) oder auf das Strukturelement (12, 14) gepumpt oder extrudiert ist.

14. Verfahren zur Verstärkung, Abdichtung oder Dämpfung eines Strukturelementes (12, 14) in einem Kraftfahrzeug, das Verfahren umfassend:
Bereitstellen einer Vorrichtung (16) nach einem der Ansprüche 1 bis 11;
Anordnen der Vorrichtung (16) an einem ersten Bestandteil (12.1, 14.1) des Strukturelementes (12, 14);
Anordnen eines zweiten Klebstoffes (13.2) auf den zweiten seitlichen Bereich (4) des Trägers (11) oder auf einen zweiten Bestandteil (12.2, 14.2) des Strukturelementes (12, 14);
Zusammenfügen des ersten Bestandteiles (12.1, 14.1) und des zweiten Bestandteiles (12.2, 14.2) des Strukturelementes (12, 14) zur Bildung des Strukturelementes (12, 14), wobei die Vorrichtung (16) und der zweite Klebstoff (13.2) im Wesentlichen zwischen dem ersten Bestandteil (12.1, 14.1) und dem zweiten Bestandteil (12.2, 14.2) angeordnet ist; und
Aktivieren des ersten Klebstoffes (13.1) und des zweiten Klebstoffes (13.2).

15. Verfahren nach Anspruch 14, wobei das Anordnen des zweiten Klebstoffs (13.2) vor oder nach der Anordnung der Vorrichtung (16) am ersten Bestandteil (12.1, 14.1) des Strukturelementes (12, 14) durchgeführt wird.
